# EUROPEAN PATENT APPLICATION

(11) **EP 4 496 099 A1**
(43) Date of publication of application: **22.01.2025**
(21) Application number: 23843396.5
(22) Date of filing: 19.07.2023
(51) Int. Cl.: H01M 50/333, H01M 50/392, H01M 50/152, H01M 50/342, H01M 50/213, H01M 50/249, H01M 10/04

(54) **BATTERY, BATTERY PACK INCLUDING BATTERY, AND VEHICLE COMPRISING BATTERY PACK**

(30) Priority: 19.07.2022 KR 20220089123; 19.07.2022 KR 20220089124; 06.07.2023 KR 20230087994
(71) Applicant: LG Energy Solution, Ltd., Seoul 07335 (KR)
(72) Inventor: SON, Jong-In, Daejeon 34122 (KR); KIM, Min-Ji, Daejeon 34122 (KR); KIM, Yong-Han, Daejeon 34122 (KR); LEE, So-Ra, Daejeon 34122 (KR); JANG, Kyung-Min, Daejeon 34122 (KR)
(74) Representative: Goddar, Heinz J.
(86) International application number: PCT/KR2023/010449
(87) International publication number: WO 2024/019550

(57) **Abstract**

A battery according to an embodiment of the present disclosure includes an electrode assembly; a housing accommodating the electrode assembly through an open portion on a side; a cap covering the open portion; and a frame including a gas passing portion configured to allow gas generated in a second space accommodating the electrode assembly to flow into a first space, wherein the first space is formed when the frame is coupled to an inner surface of the cap, spaced apart from the cap at least in part.

## Description

### TECHNICAL FIELD

The present disclosure relates to a battery, a battery pack including the same and a vehicle including the battery pack.

The present application claims priority to Korean Patent Application No. 10-2022-0089124 filed on July 19, 2022, Korean Patent Application No. 10-2022-0089123 filed on July 19, 2022 and Korean Patent Application No. 10-2023-0087994 filed on July 6, 2023 in the Republic of Korea, the disclosures of which are incorporated herein by reference.

### BACKGROUND ART

Secondary batteries undergo a charge/discharge process for activation in the manufacturing process and a degassing process to vent gas generated in the secondary batteries during charging/discharging.

The degassing process of a secondary battery may be performed by applying a negative pressure to a partial open portion of the secondary battery. For example, after partially opening a side of the secondary battery having a hermetically sealed structure, the secondary battery may be placed in a chamber in which the negative pressure is formed. In this case, gas may be vented through the open portion of the secondary battery.

In the process of removing gas generated in the secondary battery, when gas is vented by the negative pressure, electrolyte leaks may occur in the secondary battery.

Moreover, in the process of manufacturing the secondary battery, the secondary battery may be transported while standing, lying and upside down, and in this process, electrolyte stains may appear on the inner wall of a housing. In this case, when the negative pressure is applied to the open portion of the secondary battery, the electrolyte stains around the open portion may leak out.

Alternatively, the secondary battery may be placed in a specific direction during transportation, but also in this case, electrolyte stains may appear around the open portion for the degassing process due to movements of electrolyte solutions during transportation. When the negative pressure is applied to the open portion for the degassing process, the electrolyte stains around the open portion may leak out.

Accordingly, there is a need for the development of batteries having a structure for minimizing electrolyte stains around the open portion for the degassing process in the manufacturing process.

### SUMMARY

### Technical Problem

The present disclosure is designed to address the above-described problem, and therefore the present disclosure is directed to providing a battery having a structure for minimizing electrolyte stains around an open portion for a degassing process in the manufacturing process.

However, the technical problem to be solved by the present disclosure is not limited to the above-described problems, and these and other problems will be clearly understood by those skilled in the art from the following description.

### Technical Solution

To solve the above-described problem, a battery according to an embodiment of the present disclosure includes an electrode assembly; a housing accommodating the electrode assembly through an open portion on a side; a cap covering the open portion; and a frame including a gas passing portion configured to allow gas generated in a second space accommodating the electrode assembly to flow into a first space, wherein the first space is formed when the frame is coupled to an inner surface of the cap, spaced apart from the cap at least in part.

The frame may be configured such that communication between the first space and the second space occurs only through the gas passing portion.

The cap may include a degassing portion configured to vent gas generated in the housing.

The battery may include a lid for airtight closing of the degassing portion.

The lid may be integrally formed with the cap by welding an area in which the degassing portion is formed after a degassing process of venting the gas generated in the housing.

The battery may include a valve assembly disposed in the first space and configured to open the degassing portion during a degassing process of venting the gas generated in the housing and close the degassing portion after completion of the degassing process.

The valve assembly may include a closure configured to be inserted into the degassing portion from the first space; and an elastic member disposed between the closure and the frame and configured to elastically press the closure towards the degassing portion.

The cap may have a vent configured to rupture when an internal pressure of the housing increases.

A distance from a center of the cap to a coupled part of the frame and the cap may be larger than a distance from the center of the cap to the vent.

The frame may have an insulation layer on a first surface facing the electrode assembly.

The cap may not be polar.

The battery may include a terminal electrically connected to the electrode assembly.

The battery may include a current collector coupled to a side of the electrode assembly and configured to electrically connect the electrode assembly to the housing.

To solve the above-described problem, a battery pack according to an embodiment of the present disclosure includes the battery according to an embodiment of the present disclosure.

To solve the above-described problem, a vehicle according to an embodiment of the present disclosure includes the battery pack according to an embodiment of the present disclosure.

### Advantageous Effects

According to an aspect of the present disclosure, it may be possible to minimize electrolyte stains around the open portion for the degassing process in the manufacturing process.

However, the advantageous effects obtained through the present disclosure are not limited to the above-described effects, and these and other advantageous effects will be clearly understood by those skilled in the art from the following description.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a diagram showing a battery according to an embodiment of the present disclosure.
FIG. 2 is a diagram showing the battery of FIG. 1 with a degassing portion for a degassing process.
FIG. 3 is a diagram showing a vent flow of gas during a degassing process of a battery of the present disclosure.
FIG. 4 is a diagram showing the battery of FIG. 2 with a lid for closing a degassing portion after a degassing process is completed.
FIG. 5 is a diagram showing a degassing portion of the battery of FIG. 2 closed by welding after a degassing process is completed.
FIG. 6 is a diagram showing the battery of FIG. 2 with a valve assembly for opening and closing a degassing portion.
FIG. 7 is a diagram showing a vent flow of gas in the battery of FIG. 6 when a degassing portion is open.
FIG. 8 is a diagram showing a degassing portion in open and closed states by the operation of a valve assembly in the battery of FIG. 6.
FIG. 9 is a diagram showing a cap having a vent in a battery module according to an embodiment of the present disclosure.
FIG. 10 is a diagram showing a location at which a vent is formed and a location at which a frame and a cap are coupled, in the battery module of FIG. 9.
FIG. 11 is a diagram showing a frame of the present disclosure having an insulation layer.
FIG. 12 is a diagram showing a structure of a lower portion of a battery module according to an embodiment of the present disclosure.
FIG. 13 is a diagram showing a structure of an upper portion of a battery module according to an embodiment of the present disclosure.
FIG. 14 is a diagram showing a battery pack according to an embodiment of the present disclosure.
FIG. 15 is a diagram showing a vehicle according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation. Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time that the application was filed.

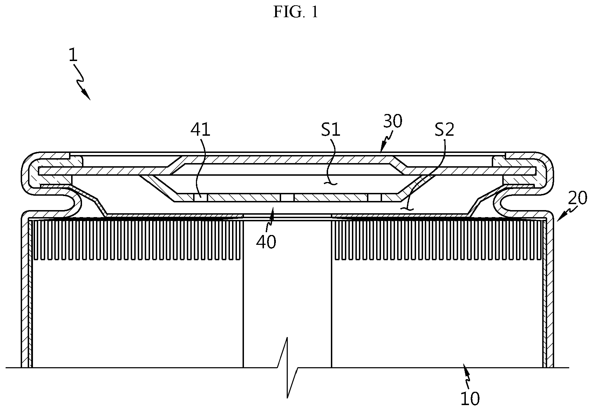

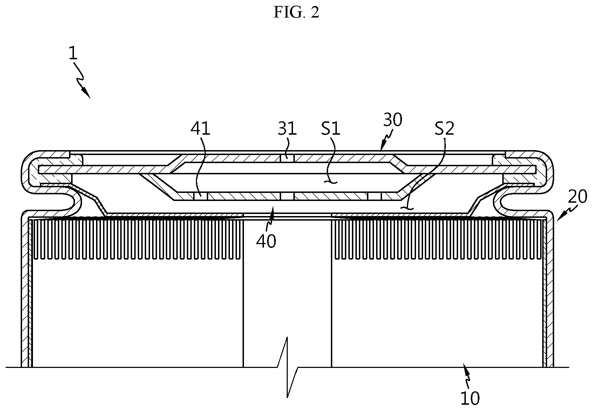

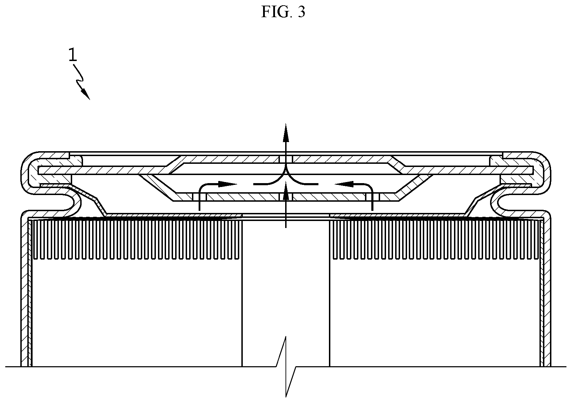

The structure of a battery according to an embodiment of the present disclosure will be described with reference to FIGS. 1 to 3. FIG. 1 is a diagram showing the battery according to an embodiment of the present disclosure. FIG. 2 is a diagram showing the battery of FIG. 1 with a degassing portion for a degassing process. FIG. 3 is a diagram showing a vent flow of gas during the degassing process of the battery of the present disclosure.

Referring to FIGS. 1 to 3, the battery 1 according to an embodiment of the present disclosure may include an electrode assembly 10, a housing 20, a cap 30 and a frame 40. The battery 1 of the present disclosure may be a rechargeable secondary battery. The battery 1 may be, for example, a cylindrical battery.

The electrode assembly 10 may include a positive electrode and a negative electrode and a separator interposed between the positive electrode and the negative electrode. The electrode assembly 10 may be, for example, a jellyroll-type electrode assembly formed by winding a stack of the positive electrode, the negative electrode and the separator. The housing 20 may be configured to accommodate the electrode assembly 10 through an open portion on one side. The housing 20 may include a conductive metal. The housing 20 may accommodate an electrolyte solution together with the electrode assembly 10. The cap 30 may be configured to cover the open portion on one side of the housing 20. The cap 30 may include a metal.

The frame 40 may be coupled to the inner surface of the cap 30, spaced apart from the cap 30 at least in part. When the frame 40 is coupled to the cap 30, a first space S1 may be formed between the cap 30 and the frame 40.

The frame 40 may include a gas passing portion 41. The gas passing portion 41 may be configured to allow gas generated in a second space S2 accommodating the electrode assembly 10 to flow into the first space. The gas passing portion 41 may be, for example, a through-hole in the frame 40. The gas passing portion 41 may be one or more.

As described above, since the battery 1 according to an embodiment of the present disclosure includes the frame 40 coupled to the inner surface of the cap 30, it may be possible to minimize electrolyte residues on the inner surface of the cap 30 due to movements of the electrolyte solution in the housing 20 in the process of manufacturing the battery 1. Since the frame 40 has the gas passing portion 41, gas generated in the housing 20 may go from the second space S2 to the first space S 1. Accordingly, the battery 1 of the present disclosure may be vented through the degassing portion 31 of the cap 30 at a location corresponding to the first space S1.

As described above, according to the battery 1 of the present disclosure, it may be possible to achieve proper venting of gas generated in the battery 1 through the activation process (see the gas vent path along the direction of the arrow in FIG. 3), and to prevent or minimize electrolyte leaks through the degassing portion 31 during gas venting.

In the present disclosure, the degassing portion 31 of the cap 30 may be formed in advance in the manufacture of the cap 30, and alternatively, may be formed later for the degassing process.

The frame 40 may be configured such that communication between the first space S1 and the second space S2 occurs only through the gas passing portion 41. In this case, the size of the gas passing portion 41 may be adjusted to allow gas generated in the second space S2 to smoothly pass through the gas passing portion 41 and keep the electrolyte solution from smoothly passing through the gas passing portion 41. Accordingly, it may be possible to prevent the electrolyte solution from moving to the degassing portion 31 of the cap 30 in the process of manufacturing the battery 1.

The cap 30 may include the degassing portion 31 to vent gas generated in the housing 20. As described above, the degassing portion 31 may be formed in the manufacture of the cap 30, and may be formed later for the degassing process. The degassing portion 31 may be, for example, a through-hole in the cap 30. The degassing portion 31 may be formed at a location corresponding to the first space S1.

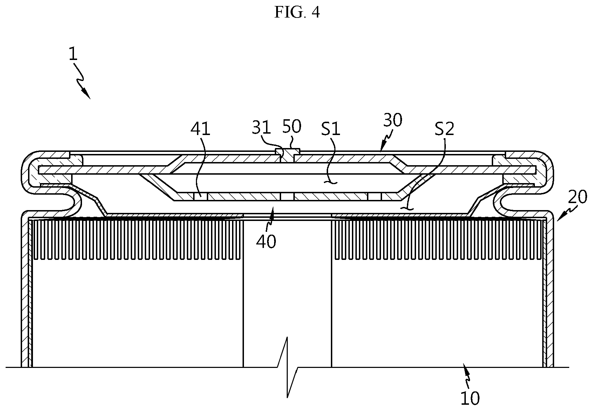

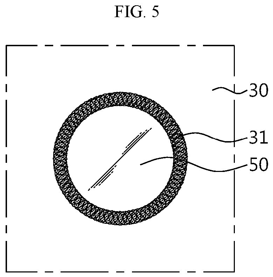

Subsequently, a lid 50 applied to the battery 1 of the present disclosure will be described with reference to FIGS. 4 and 5.

FIG. 4 is a diagram showing the battery of FIG. 2 with the lid for closing the degassing portion after the degassing process is completed. FIG. 5 is a diagram showing the degassing portion of the battery of FIG. 2 closed by welding after the degassing process is completed.

To begin with, referring to FIG. 4, the battery 1 of the present disclosure may include the lid 50 for airtight closing of the degassing portion 31. The lid 50 may have a size corresponding to the degassing portion 31 to allow for airtight closing of the degassing portion 31 by an interference fit or screw coupling. That is, the lid 50 may be a different component from the cap 30.

Alternatively, as shown in FIG. 5, the lid 50 may be integrally formed with the cap 30 by welding the area in which the degassing portion 31 is formed after the degassing process of venting gas generated in the housing 20. When the lid 50 is coupled to the degassing portion 31 by the welding, it may be possible to increase sealability of the housing 20.

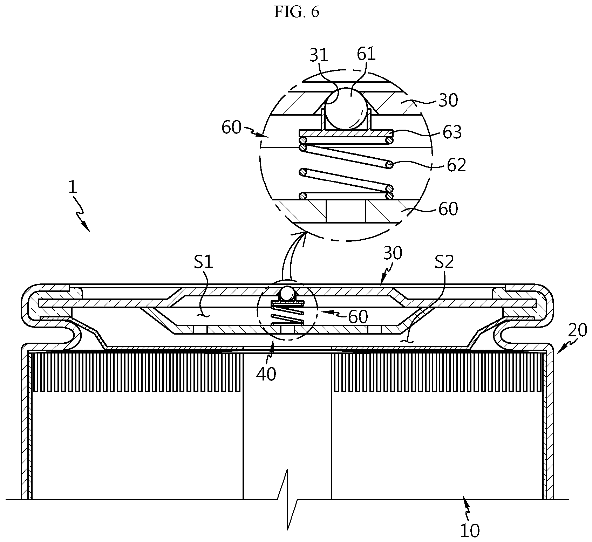

Subsequently, a valve assembly 60 applied to the present disclosure will be described with reference to FIGS. 6 to 8.

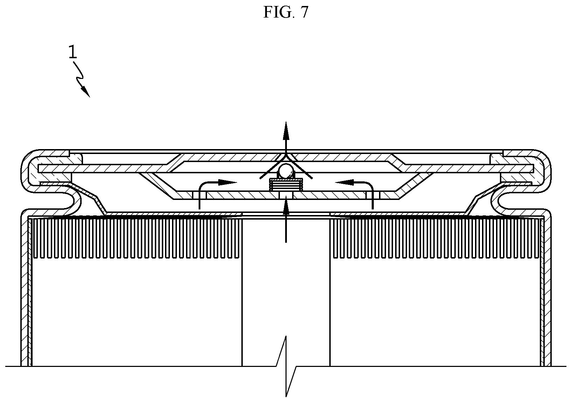

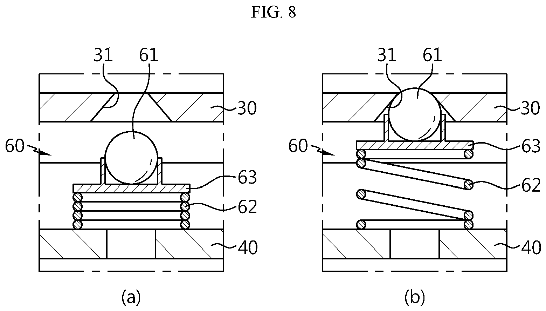

FIG. 6 is a diagram showing the battery of FIG. 2 with the valve assembly for opening and closing the degassing portion. FIG. 7 is a diagram showing a vent flow of gas in the battery of FIG. 6 when the degassing portion is open. FIG. 8 is a diagram showing the degassing portion in open and closed states by the operation of the valve assembly in the battery of FIG. 6.

To begin with, referring to FIG. 6, the battery 1 may include the valve assembly 60. The valve assembly 60 may be applied instead of the lid 50.

The valve assembly 60 may be disposed in the first space S1 and configured to open the degassing portion 31 during the degassing process of venting gas generated in the housing 20 and close the degassing portion 31 after the completion of the degassing process.

The valve assembly 60 may include a closure 61 and an elastic member 62. The closure 61 may be configured to be inserted into the degassing portion 31 from the first space S1. In this case, the width at the outer end of the degassing portion 31 may be smaller than the maximum width of the closure 61 to prevent the closure 61 from slipping off from the battery 1. The closure 61 may be, for example, a spherical metal ball.

The elastic member 62 may be disposed between the closure 61 and the frame 40 and configured to elastically press the closure 61 towards the degassing portion 31. That is, the elastic member 62 in compressed state may be interposed between the closure 61 and the frame 40. The elastic member 62 may be, for example, a spring.

The valve assembly 60 may further include a fixing member 63 interposed between the closure 61 and the elastic member 62. The fixing member 63 may be configured to support the closure 61 on one side and be supported by the elastic member 62 on the other side. One side of the fixing member 63 may be coupled to the closure 61. The other side of the fixing member 63 may be coupled to the elastic member 62.

When the battery 1 of the present disclosure includes the valve assembly 60, the degassing portion 31 of the cap 30 may be opened by applying the pressure to the closure 61 in a direction of compressing the elastic member 62. When the degassing portion 31 is open, gas in the battery 1 may exit the battery 1 along the direction of the arrow as shown in FIG. 7. That is, in the degassing process, the degassing portion 31 may be opened by applying the pressure to the closure 61 from the outside of the degassing portion 31, and when the external negative force is applied to the open degassing portion 31, gas in the battery 1 may be vented.

Referring to FIG. 8, it shows that the pressure is applied to the closure 61 and the elastic member 62 is compressed, then the degassing portion 31 is open (see FIG. 8(a)), and when the pressure is removed from the closure 61, the degassing portion 31 is closed by the closure 61 (see FIG. 8(b)). When the battery 1 of the present disclosure includes the valve assembly 60, the degassing portion 31 may be reversibly open and closed by compressions and stretches of the elastic member 62. Accordingly, there is no need to perform an additional process for closing the degassing portion 31 after the degassing process.

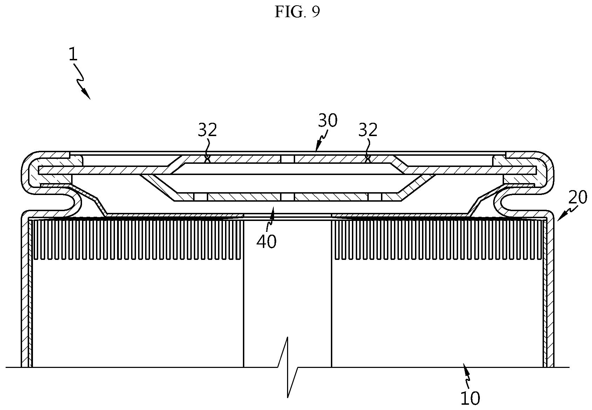

Subsequently, a vent 32 of the present disclosure will be described with reference to FIG. 9. FIG. 9 is a diagram showing the cap having the vent in the battery module according to an embodiment of the present disclosure.

Referring to FIG. 9, the cap 30 may have the vent 32. The vent 32 may be configured to rupture when the internal pressure of the housing 20 increases. The vent 32 may be a portion of the cap 30 that is more vulnerable than any other surrounding area. The vent 32 may be, for example, an area having a smaller thickness than the remaining area of the cap 30. The vent 32 may be, for example, a notched area in one or two surfaces of the cap 30. The vent 32 may extend in the shape of a closed loop around the center of the cap 30. The vent 32 may be formed continuously or discontinuously.

As described above, when the battery 1 of the present disclosure has the vent 32, it may be possible to prevent a rise in the internal pressure of the battery 1 above a predetermined level when defects or failures occur in the battery 1.

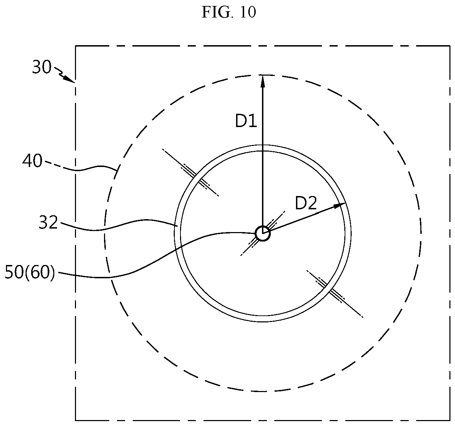

Subsequently, a location of a coupled part of the cap 30 and the frame 40 of the present disclosure will be described with reference to FIG. 10 together with FIG. 9. FIG. 10 is a diagram showing the location at which the vent is formed and the location at which the frame and the cap are coupled, in the battery module of FIG. 9.

Referring to FIGS. 9 and 10, in the battery 1 of the present disclosure having the vent 32, a distance D1 from the center of the cap 30 to the coupled part of the frame 40 and the cap 30 may be larger than a distance D2 from the center of the cap 30 to the vent 32.

In the case where the coupled part of the frame 40 and the cap 30 is located at an inner position than the vent 32, the weight of the frame 40 may hinder a portion of the cap 30 from being removed by the rupture of the vent 32. When the rupture of the vent 32 is hindered, timely gas venting may fail. According to the above-described configuration of the present disclosure, when the internal pressure of the battery 1 abnormally increases, it may be possible to prevent the rupture pressure of the vent 32 from deviating from the design value by the weight of the frame 40, thereby improving safety of the battery 1 while in use.

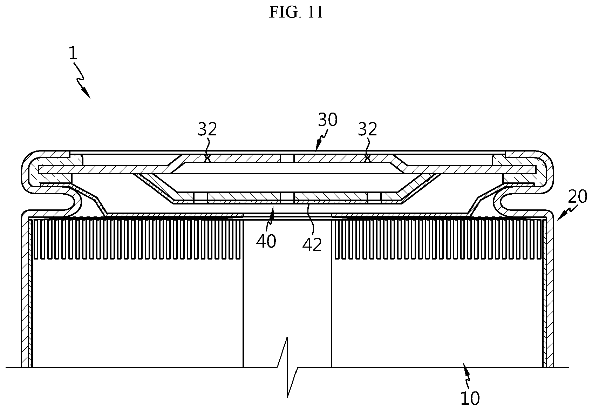

Subsequently, the insulation structure applied to the frame 40 of the present disclosure will be described with reference to FIG. 11. FIG. 11 is a diagram showing the frame of the present disclosure having an insulation layer.

Referring to FIG. 11, the frame 40 may have the insulation layer 42 on a first surface facing the electrode assembly 10. The cap 30 may include a metal to ensure strength, and in this case, the frame 40 may also include a metal for weld coupling with the cap 30.

When the frame 40 includes a metal and has conductive properties, unnecessary electrical contact may occur between the frame 40 and the electrode assembly 10 or between the frame 40 and other metal component. When the frame 40 has the insulation layer 42 as described above, it may be possible to prevent the unnecessary electrical contact. The insulation layer 42 may be, for example, formed by coating an insulating paint on the first surface of the frame 40.

Meanwhile, in the battery 1 of the present disclosure, the cap 30 may not be polar. To this end, the cap 30 may be electrically insulated from the housing 20, and also electrically insulated from the electrode assembly 10. When the cap 30 is not polar, it may be possible to prevent the occurrence and/or propagation of thermal events due to the contact between high temperature gas and polar components in the process of venting high temperature gas through the degassing portion 31 of the cap 30 and/or venting high temperature gas by the rupture of the vent 32.

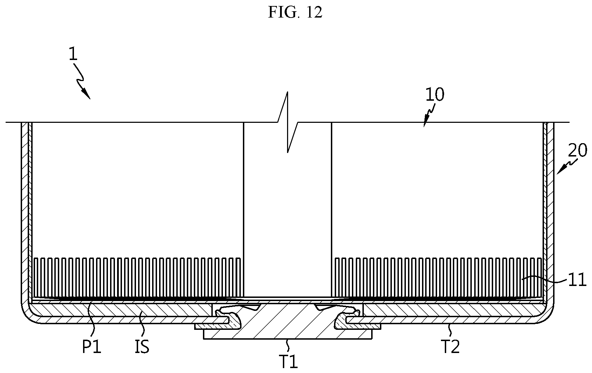

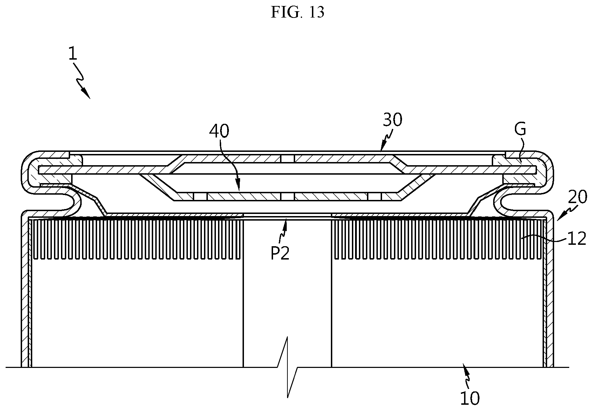

Subsequently, the electrical connection structure and the hermetically sealed structure of the battery 1 will be described with reference to FIGS. 12 and 13. FIG. 12 is a diagram showing a structure of a lower portion of the battery module according to an embodiment of the present disclosure. FIG. 13 is a diagram showing a structure of an upper portion of the battery module according to an embodiment of the present disclosure.

Referring to FIGS. 12 and 13, the battery 1 of the present disclosure may include a terminal T1 electrically connected to the electrode assembly 10. The terminal T1 may be, for example, electrically connected to a first uncoated portion 11 of the electrode assembly 10. The terminal T1 may be exposed to the outside of the housing 20 through a closed portion opposite the open portion of the housing 20. The electrical connection between the terminal T1 and the electrode assembly 10 may be established through a first current collector P1. The housing 20 may be electrically connected to a second uncoated portion 12 of the electrode assembly 10. The electrical connection between the housing 20 and the electrode assembly 10 may be established through a second current collector P2.

An insulator IS for insulation may be interposed between the electrode assembly 10 and the closed portion of the housing 20 or between the first current collector P1 and the closed portion of the housing 20. A gasket for insulation and sealing may be interposed between the terminal T1 and the housing 20. A gasket G for insulation and sealing may be interposed between the cap 30 and the housing 20.

By the electrical connection structure, the battery 1 of the present disclosure may use the terminal T1 as a first electrode terminal and the entire closed portion of the housing 20 as a second electrode terminal T2.

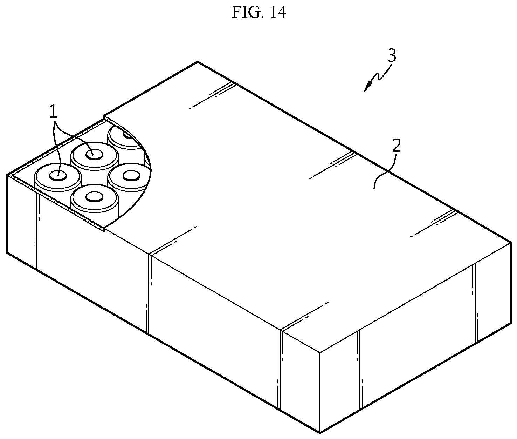

Subsequently, a battery pack 3 according to an embodiment of the present disclosure will be described with reference to FIG. 14. FIG. 14 is a diagram showing the battery pack according to an embodiment of the present disclosure.

Referring to FIG. 14, the battery pack 3 according to an embodiment of the present disclosure may include at least one battery 1 of the present disclosure. The battery 1 may be accommodated in a pack housing 2. The battery pack 3 may include a component for electrical connection of the batteries 1 and/or a Battery management system (BMS) to control the charge and discharge of the battery 1.

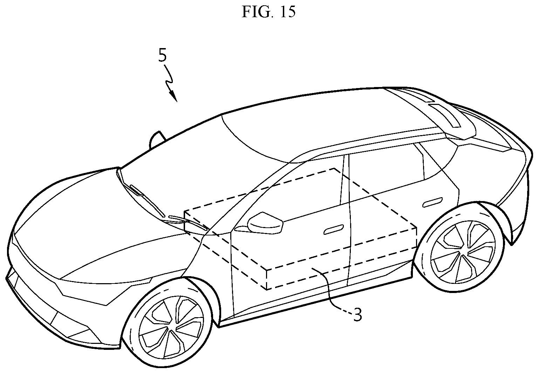

Subsequently, a vehicle 5 according to an embodiment of the present disclosure will be described with reference to 15. FIG. 15 is a diagram showing the vehicle according to an embodiment of the present disclosure.

Referring to FIG. 15, the vehicle 5 according to an embodiment of the present disclosure includes at least one battery pack 3. The vehicle 5 may be powered by the battery pack 3. The vehicle 5 may be, for example, a hybrid electric vehicle (HEV) or an electric vehicle (EV).

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

### [Description of Reference Numerals]

- 1:: Battery
- 2:: Pack housing
- 3:: Battery pack
- 5:: Vehicle
- 10:: Electrode assembly
- 11:: First uncoated portion
- 12:: Second uncoated portion
- 20:: Housing
- 30:: Cap
- 31:: Degassing portion
- 32:: Vent
- 40:: Frame
- 41:: Gas passing portion
- 42:: Insulation layer
- 50:: Lid
- 60:: Valve assembly
- 61:: Closure
- 62:: Elastic member
- 63:: Fixing member

## Claims

1. A battery, comprising:
an electrode assembly;
a housing accommodating the electrode assembly through an open portion on a side;
a cap covering the open portion; and
a frame including a gas passing portion configured to allow gas generated in a second space accommodating the electrode assembly to flow into a first space, wherein the first space is formed when the frame is coupled to an inner surface of the cap, spaced apart from the cap at least in part.

2. The battery according to claim 1, wherein the frame is configured such that communication between the first space and the second space occurs only through the gas passing portion.

3. The battery according to claim 1, wherein the cap includes a degassing portion configured to vent gas generated in the housing.

4. The battery according to claim 3, comprising:
a lid for airtight closing of the degassing portion.

5. The battery according to claim 4, wherein the lid is integrally formed with the cap by welding an area in which the degassing portion is formed after a degassing process of venting the gas generated in the housing.

6. The battery according to claim 3, comprising:
a valve assembly disposed in the first space and configured to open the degassing portion during a degassing process of venting the gas generated in the housing and close the degassing portion after completion of the degassing process.

7. The battery according to claim 6, wherein the valve assembly includes:
a closure configured to be inserted into the degassing portion from the first space; and
an elastic member disposed between the closure and the frame and configured to elastically press the closure towards the degassing portion.

8. The battery according to claim 1, wherein the cap has a vent configured to rupture when an internal pressure of the housing increases.

9. The battery according to claim 8, wherein a distance from a center of the cap to a coupled part of the frame and the cap is larger than a distance from the center of the cap to the vent.

10. The battery according to claim 1, wherein the frame has an insulation layer on a first surface facing the electrode assembly.

11. The battery according to claim 1, wherein the cap is not polar.

12. The battery according to claim 1, comprising:
a terminal electrically connected to the electrode assembly.

13. The battery according to claim 12, comprising:
a current collector coupled to a side of the electrode assembly and configured to electrically connect the electrode assembly to the housing.

14. A battery pack comprising the battery according to any one of claims 1 to 13.

15. A vehicle comprising the battery pack according to claim 14.
